# EUROPÄISCHE PATENTSCHRIFT

(11) **EP 1 554 338 B1**
(45) Veröffentlichungstag und Bekanntmachung des Hinweises auf die Patenterteilung: **17.01.2007**
(21) Anmeldenummer: 03748109.0
(22) Anmeldetag: 02.10.2003
(51) Int. Cl.: C08K 5/00

(54) **FLAMMGESCHÜTZTE POLYCARBONATE UND POLYESTERCARBONATE**
FLAMEPROOF POLYCARBONATES AND POLYESTER CARBONATES
POLYCARBONATES ET CARBONATES DE POLYESTER IGNIFUGES

(30) Priorität: 14.10.2002 DE 10247777
(43) Veröffentlichungstag der Anmeldung: 20.07.2005
(73) Patentinhaber: Bayer MaterialScience AG, 51368 Leverkusen (DE)
(72) Erfinder: HORN, Klaus, 41539 Dormagen (DE); FRANSSEN, Hans, 47809 Krefeld (DE)
(86) Internationale Anmeldenummer: PCT/EP2003/010924
(87) Internationale Veröffentlichungsnummer: WO 2004/035672

(56) Entgegenhaltungen:
- WO-A-02/50185
- US-B1- 6 462 111

## Beschreibung

Die vorliegende Erfindung betrifft flammgeschützte Zusammensetzungen aus Polycarbonat oder Polyestercarbonat und bestimmten Salzen sowie Polytetrafluorethylen (PTFE) Blends.

Die Wirkung von organischen Salzen als Flammschutzadditiv für Polycarbonate (PC) oder Polyestercarbonate (PEC) ist bekannt und z.B. in US-A 3 933 734, US-A 3 940 366, US-A 3 953 399, US-A 3 926 908 sowie in US-A 4 104 246 beschrieben.

Neben der Brennbarkeit wird in den üblichen Brandtests auch die Neigung zur Tropfenbildung und Endzündung der Unterlage beurteilt. Um das Abtropfen zu verhindern werden dem PC bzw. PEC üblicherweise Antitropfmittel wie beispielsweise PTFE zugesetzt. Bei der Einarbeitung von PTFE in PC oder PEC kommt es bei der Compoundierung zu Agglomeration der PTFE-Partikel die zu Schlieren- und Pickelbildung auf der Formteiloberfläche führt.

In US-A 5 804 654, EP-A 0 899 303 und EP-A 0 822 226 wird beschrieben, dass man zur Vermeidung dieser negativen Effekte PTFE-Blends einsetzen kann. Entsprechende Produkte sind z.B. unter den Bezeichnungen Metablen A-Serie von Misubishi-Rayon oder Blendex B449 von GE käuflich zu erhalten.

In WO-A 01/10957 werden Mischungen aus PC oder PEC und einem PTFE-Blend auf Basis eines Acrylat-Co-Polymers und Salzen beschrieben. Diese Mischungen zeigen eine flammhemmende Wirkung jedoch nur dann, wenn der Gehalt die Summe der Gehalte von Salzen und PTFE-Blend >0,65 Gew.-% ist und der PTFE-Gehalt der PTFE-Blends kleiner 30 Gew.-% ist. Es wird im UL-Test ein V-0 bei Wanddicken größer 1,6 mm erhalten.

Es ist jedoch grundsätzlich, aus Kosten- und Ressourcengründen, wünschenswert, zufriedenstellenden Flammschutz mit möglichst geringen Aufwandmengen an Additiven zu erreichen.

Daher stellte sich ausgehend vom Stand der Technik die Aufgabe, eine Zusammensetzung verfügbar zu machen, welche eine zufriedenstellende Flammschutzwirkung bei geringen Aufwandmengen an Additiven ermöglicht.

Diese Aufgabe wird überraschenderweise durch die erfindungsgemäßen Zusammensetzungen gelöst.

Es wurde überraschend gefunden, dass aromatische Polycarbonate und Polyestercarbonate in Kombination mit 0,2 bis 0,6 Gew.-%, bevorzugt 0,3-0,5 Gew.-% PTFE-Blends, sowie mit geringen Mengen, d.h. Mengen von 0,01 bis 0,1 Gew.-%, vorzugsweise 0,01 bis 0,08 Gew.-%, besonders bevorzugt 0,01 bis 0,06 Gew.-%, und ganz besonders bevorzugt 0,01 bis 0,03 Gew.-% bestimmter organsicher Flammschutzsalze, wobei die Summe der beiden Additive vorzugsweise weniger als 0,65 Gew-% betragen, messbar schneller verlöschen und im Brennbarkeitstest nach UL 94 ein V-0 bei geringen Wanddicken bis zu 1,2 mm und ein 5VB in Wanddicken bis zu 2,0 mm erreicht wird. Überraschenderweise wurde also gefunden, dass durch die Kombination von Salz und PTFE-Blend die PTFE-Komponente nicht mehr überwiegend als Antitropfmittel wirkt, sondern außerdem die Nachbrennzeii so stark verringert wird, dass nur noch der Zusatz einer sehr kleinen Menge Salz nötig wird, um einen vergleichbar guten Flammschutz zu erzielen wie mit reinem PTFE und hohen Salzmengen. Die Brennbarkeit wird auf Werte verringert wie sie durch den Zusatz der gleichen Mengen an Salz und reinem PTFE nicht zu erreichen ist.

Dies ist um so überraschender als üblicherweise geringere Mengen an Salz in der Mischung schlechter verteilt werden können. Der Fachmann würde erwarten, dass die erfindungsgemäßen Konzentrationen wirkungslos seien.

Zudem sind die notwendigen Additive leicht, da kommerziell erhältlich, zugänglich und der Einsatz in diesen Mengen auch sehr kostengünstig.

Gegenstand der vorliegenden Erfindung ist außerdem ein Verfahren zur Herstellung der erfindungsgemäßen Polycarbonat- und Polyestercarbonatformmassen, dadurch gekennzeichnet, dass man die Salze in Kombination mit geeigneten PTFE-Blends, entweder als solche oder in Form eines Polycarbonat- oder Polyestercarbonatkonzentrates in üblicher Weise mischt und in geeigneter Weise schmelzcompoundiert

Die Verwendung der erfindungsgemäßen Zusammensetzungen zur Herstellung von Formkörpern und Extrudaten, sowie die Formteile und Extrudate aus den erfindungsgemäßen Zusammensetzungen sind ebenfalls Gegenstand dieser Anmeldung.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsumiert werden.

Die Herstellung der erfindungsgemäß zu verwendenden Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Einzelheiten der Herstellung von Polycarbonaten sind in Hunderten von Patentschriften seit etwa 40 Jahren niedergelegt. Beispielhaft sei hier nur auf
- Schnell, "Chemistry and Physics of Polycarbonates", Polymer Reviews, Volume 9, Interscience Publishers, New York, London, Sydney 1964;
- D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 19, 75-90 (1980)";
- D. Freitag, U. Grigo, P.R. Müller, N. Nouvertne', BAYER AG, "Polycarbonates" in Encyclopedia of Polymer Science and Engineering, Volume 1 1, Second Edition, 1988, Seiten 648-718 und schließlich
- Dres. U. Grigo, K. Kircher und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299
verwiesen.

Die thermoplastischen Polycarbonate einschließlich der thermoplastischen, aromatischen Polyestercarbonate haben mittlere Molekulargewichte M_{w} (ermittelt durch Messung der relativen Viskosität bei 25°C in CH₂Cl₂ und einer Konzentration von 0,5 g pro 100 ml CH₂Cl₂) von 12 000 bis 120 000, vorzugsweise von 15 000 bis 80 000 und insbesondere von 22 000 bis 60 000.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, (α,α'-Bis-(hydroxyphenyl)-diisopropylbenzole, sowie deren kemalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,1-Bis-(4-hydroxyphenyl)-m/p-diisopropylbenzol, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-m/p-diisopropyl-benzol, 2,2- und 1,1-Bis-(4-hydroxyphenyl)-3,3,5-trimethylcyclohexan.

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-A-3 028 635, US-A-2 999 835, US-A-3 148 172, US-A-2 991 273, US-A-3 271 367, US-A-4 982 014 und US-A-2 999 846, in den deutschen Offenlegungsschriften DE-A-1 570 703, DE-A-2 063 050, DE-A-2 036 052, DE-A-2 211 956 und DE-A-3 832 396, der französischen Patentschrift FR-A-1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese stammenden Verunreinigungen kontaminiert sein können, obwohl es wünschenswert ist, mit möglichst sauberen Rohstoffen zu arbeiten.

Geeignete Kettenabbrecher sind sowohl Monophenole als auch Monocarbonsäuren. Geeignete Monophenole sind Phenol, Alkylphenole wie Kresole, p-tert.Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, bzw. deren Mischungen.

Geeignete Monocarbonsäuren sind Benzoesäure, Alkylbenzoesäuren und Halogenbenzoesäuren.

Bevorzugte Kettenabbrecher sind die Phenole der Formel (I)

R²-Ph-OH (I)

worin
- R²: für H oder einen verzweigten oder unverzweigten C₁-C₁₈-Alkylrest steht.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder polyfunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten, 2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)phenyl)-orthoterephthalsäureester, Tetra-(4-hydroxyphenyl)-methan, Tetra-(4-(4-hydroxy-phenyl-isopropyl)-phenoxy)-methan und 1,4-Bis(4',4"-dihydroxy-triphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2,5 Mol-%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden.

Die Maßnahmen zur Herstellung der Polycarbonate sind dem Fachmann geläufig.

Für die Herstellung der Polyestercarbonate geeignete aromatische Dicarbonsäuren sind beispielsweise Phthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Phasengrenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat. Katalysatoren, Lösungsmittel, Aufarbeitung, Reaktionsbedingungen etc. für die Polycarbonatherstellung sind in beiden Fällen hinreichend beschrieben und bekannt.

Die Herstellung der erfindungsgemäßen Formmassen durch Zugabe der erfindungsgemäßen PTFE-Blends und Salze geschieht z.B. während der Synthese in die Schmelze oder während eines Aufarbeitungs- oder Konzentrierungsschrittes, aber auch in die Lösung. Beispielweise indem man die Polycarbonate, gelöst in einem Polycarbonatlösungsmittel, simultan oder sukzessive mit den erfindungsgemäßen PTFE-Blends und Salze und gegebenenfalls weiteren Additiven versetzt und das Polycarbonatlösungsmittel anschließend abdampft und das Polycarbonat isoliert. Alternativ auch indem man die erfindungsgemäßen PTFE-Blends und Salze und gegebenenfalls weitere Additive in die Polycarbonatschmelze dosiert und nach Durchmischung das additivierte Polycarbonat isoliert.

Gegenstand der vorliegenden Erfindung ist somit auch ein Verfahren zur Herstellung der erfindungsgemäßen Polycarbonatformmassen, das dadurch gekennzeichnet ist, dass man Polycarbonate mit den erfindungsgemäßen PTFE-Blends und Salze entweder simultan oder sukzessive, entweder in Substanz oder in Lösung, vermischt, und danach die Gemische entweder bei Temperaturen zwischen 260°C und 450°C, vorzugsweise 260°C bis 420°C und ganz besonders bevorzugt 260° bis 380°C schmelzcompoundiert oder bei Temperaturen zwischen 250°C und 360°C schmelzextrudiert, oder die Polycarbonatlösungen eindampft und das erhaltene Gemisch granuliert.

Die erfindungsgemäßen Polycarbonatformmassen können noch die üblichen Additive, wie Glasfasern, Füllstoffe, Pigmente, UV-, Thermo-Stabilisatoren, Antioxidantien, Flammschutzmittel, Schlagzähmodifikatoren und ggf. andere Entformungsmittel, in den für thermoplastische Polycarbonate üblichen Mengen enthalten.

Geeignete PTFE-Blends im Sinne der Erfindung sind alle physikalischen Mischungen von PTFE mit einer Schichtsubstanz welche die PTFE Ketten umhüllt und mit Polycarbonat bzw. Polyestercarbonat und PTFE verträglich ist und die Fibrillenstruktur der PTFE-Ketten innerhalb der Umhüllung unverändert läßt. Geeignete Substanzen sind beispielsweise Polyvinylderivate, bevorzugt SAN und Polyacrylate In diesen Blends liegt PTFE in Anteilen von 30 bis 70 Gew.-%, bevorzugt von 40-60 Gew. % besonders bevorzugt von 40 bis 55 Gew. % vor. Solche Blends sind kommerziell erhältlich beispielsweise unter den Handelsnamen Blendex B449 der GE Speciality Chemicals oder der Metablen A-Serie von Mitsubishi Rayon. Die Präparation der Blends erfolgt durch die Vermischung einer PTFE-Emulsion mit einer Emulsion des geeigneten Blendpartners. Aus der erhaltenen Mischung wird durch ein geeignetes Verfahren wie Coagulation, Gefriertrocknung, Sprühtrocknung u.s.w. der Blend gewonnen.

Der Zusatz von Alkali- bzw. Erdalkalisalzen zur Herstellung von flammwidrigen PC oder PEC ist bekannt, siehe beispielsweise: US-A 3 775 367, 3 836 490, 3 933 734, 3 940 366, 3 953 399, 3 926 908, 4 104 246, 4 469 833, 4 626 563, 4 254 015, 4 626 563 und 4 649 168.

Geeignet sind Alkali- bzw. Erdalkalisalze von aliphatischen bzw. aromatischen Sulfonsäure- Sulfonamid- und Sulfonimidderivaten z.B.:
Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kalium-methylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithium-phenylphosphonat, Natrium- oder Kalium-diphenylsulfon-sulfonat, Natrium- oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikalium-hexafluorotitanat, Dinatrium- oder Dikalium-hexafluorosilikat, Dinatrium- oder Dikalium-hexafluorozirkonat,Natrium- oder Kalium-pyrophosphat, Natrium- oder Kalium-metaphosphat, Natrium- oder Kalium-tetrafluoroborat, Natrium- oder Kalium-hexafluorophosphat, Natrium- oder Kalium- oder Lithiumphosphat, N-(p-tolylsulfonyl-)-p-toluolsulfimid-Kaliumsalz, N-(N'-Benzylaminocarbonyl)-sulfanylimid-Kaliumsalz.

Bevorzugt werden Natrium- oder Kaliumperfluorbutansulfat, Natrium- oder Kaliumperfluoroctansulfat, Natrium- oder Kalium-diphenylsulfon-sulfonat und Natrium- oder Kalium-2,4,6-trichlorbenzoat und N-(p-tolylsulfonyl-)-p-toluolsulfimid-Kaliumsalz, N-(N'-Benzylaminocabonyl)-sulfanylimid-Kaliumsalz ganz besonders bevorzugt sind Kaliumperfluorbutansulfat und Natrium- oder Kalium-diphenylsulfon-sulfonat.

Ebenfalls sind Mischungen der genannten Salze geeignet.

Diese organischen Flammschutzsalzen werden in Mengen von 0,01 bis 0,1 Gew.-%, vorzugsweise 0,01 bis 0,08 Gew.-%, besonders bevorzugt 0,01 bis 0,06 Gew.-% und ganz besonders bevorzugt 0,01 bis 0,03 Gew.-% in den Formmassen eingesetzt.

Neben den erfindungsgemäß einzusetzenden Salzen und PTFE-Blends können auch weitere, an sich bekannte Zusatzstoffe wie Glasfasern, Füllstoffe, Pigmente, UV-Stabilisatoren, Antioxidantien und Entformungsmittel zugesetzt werden.

Eine ganz besonders bevorzugte Ausführungsform besteht in der zusätzlichen Verwendung anorganischer und organischer, bevorzugt anorganischer Pigmente als Additiv. Hierdurch wird die flammwidrige Wirkung nochmals verstärkt. Zusammensetzungen enthaltend PC oder PEC, die erfindungsgemäßen PTFE-Blends, und speziellen Salze plus mindestens ein anorganisches oder organisches, bevorzugt anorganisches Pigment sind daher ebenfalls Gegenstand der vorliegenden Anmeldung.

Die anorganischen und organische Pigmente werden dabei in Mengen von 0,01 Gew.-% bis zu 5 Gew.-%, bevorzugt von 0,2 Gew.-% bis 4 Gew.-% und ganz besonders bevorzugt von 0,5 Gew.-% bis 3 Gew.-% eingesetzt.

Anorganische Pigmente im Sinne der Erfindung sind Metalloxide, Schwefel-haltige Silicate, Metallsulfide und -selenide, komplexe Metallcyanide, Metallsulfate, -chromate und -molybdate.

Bevorzugte anorganische Pigmente sind Weiß-, Schwarz-, Bunt- und Glanzpigmente, die man aus anorganischen Grundstoffen durch chemische. und/oder physikalische Umwandlung wie Aufschließen, Fällen, Glühen usw. erhält. Beispielsweise seien genannt Titanweiß (Titandioxid), Bleiweiß, Zinkweiß, Lithophone, Antimonweiß, Manganschwarz, Kobaltschwarz und Antimonschwarz, Bleichromat, Mennige, Zinkgelb, Zinkgrün, Cadmiumrot, Kobaltblau, Berliner Blau, Ultramarin, Manganviolett, Schweinfurter Grün, Molybdatorange und Molybdatrot, Strontiumgelb, Aluminiumoxid, Bariumsulfat, Cersulfid, Chromoxide wie Chromorange, -rot und -oxidgrün, Kobaltaluminiumoxid, Eisenoxide wie Eisenoxidschwarz und -rot, Wismutvanadat, Zinnoxid und gemischte Oxide oder Sulfide vom Typ Kobaltaluminiumchromoxide, Natriumaluminiumsiliciumsulfid, Titanchromantimonoxide und Titanantimonnickeloxide.

Organische Pigmente sind beispielsweise Kupferphthalocyanine und Chlorkupferphthalocyanine.

Besonders bevorzugt sind Titandioxid, Bariumsulfat, Eisenoxide, Chromoxide und Kupferphthalocyanine.

Ganz besonders bevorzugt ist Titandioxid.

Die erfindungsgemäßen PC- und PEC-Formmassen können auf den üblichen Verarbeitungsmaschinen nach bekannten Methoden unter den für Polyestercarbonat üblichen Verarbeitungsparametern zu flammfesten Formkörpern und Folien verarbeitet werden.

Die Formmassen eignen sich bevorzugt für Spritzguss- und Extrusionsartikel, an die erhöhte Anforderungen bezüglich Flammfestigkeit gestellt werden.

Die Formteile finden beispielsweise Anwendung im Elektro-, Elektronik, Bau-, Fahrzeug- und/oder Flugzeugsektor.

### Beispiele

### Allgemeines:

Als eine übliche Methode zur Bestimmung des Brandverhaltens von Teilen aus Poly(ester)carbonate ist der UL94-Test bekannt "Standard for Tests for Flammability of Plastic Materials for Parts in Devices and Appliances (Edition 5 10/29/96)" Underwriters Laboratories Inc. Hierbei kann die Einstufung in eine V- und eine 5V-Klasse erreicht werden. Als ein effektiver Flammschutz für Poly(ester)carbonate gilt hierbei eine Klassifizierung im V-Test mit der Klasse V-0 in bis zu 1,2 mm Dicke und gleichzeitig ein Bestehen des 5VB-Testes in 2,0 mm Dicke. Bei beiden Tests führt eine Endzündung der Watte unterhalb der Probe, durch abtropfende brennende Teile, zur Abstufung in der Klassifizierung bzw. zum nicht bestehen des Tests. Die Intensität der Beflammung und die Beurteilung der Nachbrennzeiten variieren zwischen beiden Tests. Für Polycarbonat bedeutet dieses in Praxis, dass beim V-Test stärker das Nachbrennverhalten beurteilt wird, während beim 5VB-Test überwiegend das Tropfverhalten bewertet wird.

### Beispiel 1

93 Gew.-% eines aromatischen Polycarbonats auf Basis Bisphenol-A (Schmelz-Massefließrate 10, gemessen nach ISO1133 / Makrolon 2805) wurde bei 280°C auf einem Doppelwellenextruder aufgeschmolzen. Dann dosierte man eine Mischung aus 6,55 Gew.-% eines zu Pulver vermahlenen aromatischen Polycarbonates auf Basis Bisphenol-A (Schmelz-Massefließrate 6,5, gemessen nach ISO1133 / Makrolon 3108), 0,05 Gew.-% Perfluorbutansulfonat-K-Salz und 0,4 Gew.-% PTFE-Blends aus einer physikalischen Mischung von PTFE und Methyl-Methacrylat-/Butyl-Acrylat-Co-Polymer (mit ca. 40 Gew.-% PTFE / Metablen A-3800) direkt in die Polycarbonatschmelze. Der Polymerstrang wurde gekühlt und granuliert. Das Granulat wurde im Vakuumtrockenschrank bei 80°C getrocknet und auf einer Spritzgussmaschine bei 280°C zu Prüfkörpern mit den Abmessungen 127 x 12 x Dicke verarbeitet. Die Prüfstäbe wurden dann einer Brennbarkeitsprüfung gemäß Vorschrift UL 94 (Brennbarkeit fester Kunststoffproben, Underwriter Laboratories) unterworfen und in der Dicke 1,5mm der Brennbarkeitsklasse V-0 zugeordnet. Außerdem wurde der 5VB-Test in den Dicken von 3,0 und 2,4mm bestanden. Bei den Beispiele 2 bis 5 wurde entsprechend verfahren. Die Ergebnisse sind der Tabelle 1 zu entnehmen. Die Zusammensetzung gemäß Beispiel 6 wurde analog mit zusätzlich Titandioxidpigment enthaltendem Material durchgeführt und bestand den 5VB-Test selbst noch bei 2,0 mm.

### Vergleichsbeispiel 1

93 Gew.-% eines aromatischen Polycarbonats auf Basis Bisphenol-A (Schmelz-Massefließrate 10, gemessen nach ISO1133 / Makrolon 2805) wurde bei 280°C auf einem Doppelwellenextruder aufgeschmolzen. Dann dosierte man eine Mischung aus 6,7 Gew.-% eines zu Pulver vermahlenden aromatischen Polycarbonates auf Basis Bisphenol-A (Schmelz-Massefließrate 6,5, gemessen nach ISO1133 / Makrolon 3108), 0,05 Gew.-% Perfluorbutansulfonat-K-Salz und 0,25 Gew.-% eines PTFE-Pulvers (100%-ig PTFE Hostaflon TF2021) direkt in die Polycarbonatschmelze. Der Polymerstrang wurde gekühlt und granuliert. Das Granulat wurde im Vakuumtrockenschrank bei 80°C getrocknet und auf einer Spritzgussmaschine bei 280°C zu Prüfkörpern mit den Abmessungen 127 x 12 x Dicke verarbeitet. Die Prüfstäbe wurden dann einer Brennbarkeitsprüfung gemäß Vorschrift UL 94 (Brennbarkeit fester Kunststoffproben, Underwriter Laboratories) unterworfen und in den Dicken von 2,4 und 1,5mm der Brennbarkeitsklasse V-2 zugeordnet. Außerdem wurde der 5VB-Test in den Dicken von 3,0 und 2,4mm nicht bestanden.

Bei den Vergleichsbeispielen 2 bis 6 wurde entsprechend verfahren Die Ergebnisse sind der Tabelle 1 zu entnehmen.

**Tabelle 1**

| | | Vergleichsbeispiele | | | | | | Beispiele: | | | | | |
|---|---|---|---|---|---|---|---|---|---|---|---|---|---|
| | | -1 | -2 | -3 | -4 | | -6 | -1 | -2 | -3 | -4 | -5 | -6 |
| Makrolon 2805 | | 93 | 93 | 93 | 93 | 93 | 90,45 | 93 | 93 | 93 | 93 | 93 | 90 |
| Makrolon 3108 | | 6,55 | 6,65 | 6,7 | 6,95 | 6,5 | 8,9 | 6,55 | 6,57 | 6,55 | 6,45 | 6,475 | 7,65 |
| Salz 1 | | 0,2 | 0,1 | 0,05 | 0,05 | | 0,15 | 0,05 | 0,03 | | 0,05 | 0,025 | 0,05 |
| Salz 2 | | | | | | | | | | 0,05 | | | |
| PTFE | | 0,25 | 0,25 | 0,25 | | | | | | | | | |
| PTFE-Blend 1 | | | | | | | | 0,4 | 0,4 | 0,4 | | | |
| PTFE-Blend 2 | | | | | | 0,5 | 0,5 | | | | 0,5 | 0,5 | 0,5 |
| Titandioxid | | | | | | | | | | | | | 1,5 |
| UL94-V | 2,4mm | | V-2 | V-2 | V-2 | | | V-0 | V-0 | V-0 | | | |
| | Nbz.* [s] | | burning drip down | | | | | 13/14 | 15/16 | 14/16 | | | |
| | 1,5mm | V-0 | V-2 | V-2 | | V-1 | V-1 | V-0 | V-0 | V-0 | | V-0 | V-0 |
| | Nbz.* [s] | 24/13 | burning drip down | | | 45/49 | 65/13 | 14/13 | 15/13 | 22/24 | | 14/15 | 15/11 |
| | 1,2mm | V-1 | | | | | V-1 | V-0 | V-0 | V-0 | V-0 | V-0 | V-0 |
| | Nbz.* [s] | 68/23 | | | | | 62/26 | 33/21 | 28/16 | 39/35 | 16/16 | 18/15 | 20/10 |
| UL94-5VB | 3,0mm | passed | failed | failed | failed | failed | failed | passed | passed | passed | | passed | |
| | 2,4mm | failed | | | | failed | failed | passed | passed | failed | passed | passed | passed |
| | 2,0mm | | | | | | | failed | failed | | | | passed |

| | | | | | | | | | | | | | |
|---|---|---|---|---|---|---|---|---|---|---|---|---|---|
| *=Nachbrennzeit, Gesamtbrenndauer je Satz (5 x 2 Beflammungen) nach 2Tagen / 7Tagen - PC:: Makrolon 2805 - Granulat (Bayer-AG) Makrolon 3108 - Pulver (Bayer-AG) - Salz 1:: Perfluorbutansulfonat-K-Salz - Salz 2:: Diphenyl-Sulfon-3-Sulfonat-K-Salz - PTFE:: Hostaflon TF2021 - PTFE-Blend 1:: Metablen A-3800 (ca. 40% PTFE CAS 9002-84-0 und ca. 60 % Methylmethacrylat/Butylacrylat copolymer CAS 25852-37-3 von Misubishi-Rayon) - PTFE-Blend 2:: Blendex B449 (ca. 50% PTFE und ca. 50 % SAN [aus 80 % Styrol und 20 % Acrylnitril] von GEP-A) | | | | | | | | | | | | | |

Wie man den Beispielen, insbesondere Vergleichsbeispiel 6 im Vergleich zu den Beispielen 4 und 6, leicht entnehmen kann, erreicht man durch die erfindungsgemäße Zusammensetzung unerwartet gute Flammschutzeigenschaften.

## Patentansprüche

1. Zusammensetzungen, bestehend aus linearen Polycarbonaten oder Polyestercarbonaten, 0,2 bis 0,6 Gew.-% PTFE-Blends, welche 30 bis 70 Gew.-% PTFE enthalten, und 0,01 bis 0,1 Gew. -% organische Flammschutzsalze sowie gegebenenfalls Additive ausgewählt aus Glasfasern, Füllstoffen, Pigmenten, UV-Stabilisatoren, Thermostabilisatoren, Antioxidantien, Flammschutzmitteln und Entformungsmitteln.

2. Zusammensetzungen gemäß Anspruch 1, **dadurch gekennzeichnet, dass** sie mindestens ein anorganisches oder organisches Pigment enthalten.

3. Zusammensetzungen gemäß Anspruch 1, **dadurch gekennzeichnet, dass** sie 0,01-0,08 Gew.-% an organischen Flammschutzsalzen enthalten.

4. Zusammensetzungen gemäß Anspruch 1, **dadurch gekennzeichnet, dass** sie 0,3 bis 0,5 Gew.-% PTFE-Blends enthalten.

5. Zusammensetzung gemäß Anspruch 1, **dadurch gekennzeichnet, dass** die Summe aus PTFE-Blend und organischem Flammschutzsalz weniger als 0,65 Gew.-% beträgt.

6. Zusammensetzungen gemäß Anspruch 1, **dadurch gekennzeichnet, dass** sie 0,01-5 Gew.-% anorganische und/oder organische Pigmente enthalten.

7. Zusammensetzungen gemäß Anspruch 1, wobei Diphenole zur Herstellung der Polycarbonate oder Polyestercarbonate ausgewählt sind aus Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, (α,α'-Bis-(hydroxyphenyl)-diisopropylbenzole, sowie deren kernalkylierte Verbindungen.

8. Verfahren zur Herstellung von Zusammensetzungen gemäß Anspruch 1, **dadurch gekennzeichnet, dass** man die entsprechenden Anteile schmelzcompoundiert.

9. Verwendung von Zusammensetzungen gemäß Anspruch 1 zur Herstellung von Formkörpern und Extrudaten.

10. Formkörper und Extrudate aus Zusammensetzungen gemäß Anspruch 1.

## Claims

1. Compositions comprising linear polycarbonates or polyester carbonates, from 0.2 to 0.6 wt.% PTFE blends which comprise from 30 to 70 wt.% PTFE, and from 0.01 to 0.1 wt.% organic flame-retardant salts, as well as optionally additives selected from glass fibres, fillers, pigments, UV stabilisers, heat stabilisers, antioxidants, flame retardants and mould release agents.

2. Compositions according to Claim 1, **characterised in that** they comprise at least one inorganic or organic pigment.

3. Compositions according to Claim 1, **characterised in that** they comprise from 0.01 to 0.08 wt.% organic flame-retardant salts.

4. Compositions according to Claim 1, **characterised in that** they comprise from 0.3 to 0.5 wt.% PTFE blends.

5. Composition according to Claim 1, **characterised in that** the sum of PTFE blend and organic flame-retardant salt is less than 0.65 wt.%.

6. Compositions according to Claim 1, **characterised in that** they comprise from 0.01 to 5 wt.% inorganic and/or organic pigments.

7. Compositions according to Claim 1, wherein diphenols for the preparation of the polycarbonates or polyester carbonates are selected from hydroquinone, resorcinol, dihydroxydiphenyl, bis(hydroxyphenyl) alkanes, bis(hydroxyphenyl) cycloalkanes, bis(hydroxyphenyl) sulfides, bis(hydroxyphenyl) ethers, bis(hydroxyphenyl) ketones, bis(hydroxyphenyl) sulfones, bis(hydroxyphenyl) sulfoxides, (α,α'-bis(hydroxyphenyl) diisopropylbenzenes, as well as compounds thereof which are alkylated in the ring.

8. Process for the preparation of compositions according to Claim 1, **characterised in that** the corresponding constituents are melt-compounded.

9. Use of compositions according to Claim 1 for the preparation of moulded bodies and extrudates.

10. Moulded bodies and extrudates prepared from compositions according to Claim 1.

## Revendications

1. Compositions constituées de polycarbonates ou de polyestercarbonates linéaires, de 0,2 à 0,6 % en poids de mélanges de PTFE contenant 30 à 70 % en poids de PTFE, et de 0,01 à 0,1 % en poids de sels pare-flamme organiques ainsi que, le cas échéant, d'additifs sélectionnés parmi des fibres de verre, des charges, des pigments, des stabilisants aux UV, des thermostabilisants, des antioxydants, des agents pare-flamme et des agents de démoulage.

2. Compositions selon la revendication 1, **caractérisées en ce qu'**elles contiennent au moins un pigment inorganique ou organique.

3. Compositions selon la revendication 1, **caractérisées en ce qu'**elles contiennent 0,01 à 0,08 % en poids de sels pare-flamme organiques

4. Compositions selon la revendication 1, **caractérisées en ce qu'**elles contiennent 0,3 à 0,5 % en poids de mélanges de PTFE.

5. Composition selon la revendication 1, **caractérisée en ce que** la somme du mélange de PTFE et du sel pare-flamme organique est inférieure à 0,65 % en poids.

6. Compositions selon la revendication 1, **caractérisées en ce qu'**elles contiennent 0,01 à 5 % en poids de pigments inorganiques et/ou organiques.

7. Compositions selon la revendication 1 dans lesquelles les diphénols pour la préparation des polycarbonates ou des polyestercarbonates sont sélectionnés parmi les composés suivants: hydroquinone, résorcine, dihydroxydiphényle, bis-(hydroxyphényl)-alcanes, bis-(hydroxyphényl)-cycloalcanes, bis-(hydroxyphényl)-sulfures, bis-(hydroxyphényl)-éthers, bis-(hydroxyphényl)-cétones, bis-(hydroxyphényl)-sulfones, bis-(hydroxyphényl)-sulfoxydes et α,α'-bis-(hydroxyphényl)-diisopropylbenzènes, ainsi que leurs composés alkylés sur le noyau.

8. Procédé de préparation de compositions selon la revendication 1, **caractérisé en ce que** l'on compounde dans la masse fondue les ingrédients correspondants.

9. Utilisation de compositions selon la revendication 1 pour la production de pièces moulées et de produits d'extrusion.

10. Pièces moulées et produits d'extrusion à base des compositions selon la revendication 1.
